# EUROPÄISCHE PATENTSCHRIFT

(11) **EP 3 257 369 B1**
(45) Veröffentlichungstag und Bekanntmachung des Hinweises auf die Patenterteilung: **17.10.2018**
(21) Anmeldenummer: 16174696.1
(22) Anmeldetag: 16.06.2016
(51) Int. Cl.: A01K 5/015, A01K 39/01

(54) **BESCHÄFTIGUNGSMATERIAL**
ENTERTAINMENT MATERIAL
MATÉRIEL D'OCCUPATION

(43) Veröffentlichungstag der Anmeldung: 20.12.2017
(73) Patentinhaber: ISF GmbH, 23812 Wahlstedt (DE)
(72) Erfinder: MATHIES, Edmund, 25436 Moorrege (DE); RAMHOLD, Dietmar, 23820 Pronstorf-Strenglin (DE); MASUCH, Jens, 25469 Halstenbek (DE); STRAUCH, Wolfram, 22587 Hamburg (DE); RIMBACH, Martin, 24558 Henstedt-Ulzburg (DE)
(74) Vertreter: Hauck Patentanwaltspartnerschaft mbB

(56) Entgegenhaltungen:
- DE-C- 829 246
- DE-U1-202014 105 826
- NL-A- 257 337
- US-A- 0 382 048
- US-A- 4 221 818
- US-A1- 2009 178 430

## Beschreibung

Die Erfindung betrifft ein Beschäftigungsmaterial für Schweine, Geflügel oder andere Nutztiere.

Gemäß der EU-Richtlinie 2008/120/EG über Mindestanforderungen für den Schutz von Schweinen müssen Schweine ständigen Zugang zu ausreichenden Mengen an Materialien haben, die sie untersuchen und bewegen können, durch die die Gesundheit der Tiere nicht gefährdet werden kann. Nach der deutschen Tierschutz-Nutztierhaltungsverordnung hat der Halter von Schweinen sicherzustellen, dass jedes Schwein jederzeit Zugang zu gesundheitlich unbedenklichem und in ausreichender Menge vorhandenem Beschäftigungsmaterial hat, das das Schwein untersuchen und bewegen kann, vom Schwein veränderbar ist und seinem Erkundungsverhalten dient. Als organische Beschäftigungsmaterialien zählen u.a. Raufutter, Holz, Hanfseile, Naturkautschuk und Melasseblocks.

Die DE 20 2014 105 826 U1 beschreibt einen Leckstein insbesondere für Schweine mit einem geringeren Platzbedarf und höherer Stabilität bei Lagerung und Transport. Der Leckstein umfasst eine Faltschachtel, die eine hexagonale Bodenwand, eine hexagonale Deckwand und Seitenwände zwischen den Rändern der Bodenwand und der Deckwand aufweist, und eine in der Faltschachtel angeordnete Leckmasse. Eine Vielzahl dieser Lecksteine ist in wabenartiger Anordnung nebeneinander und in mehreren Schichten übereinander stabil auf einer Palette lagerbar und transportierbar. Die Leckmasse wird im Stall in einer Halterung oberhalb des Stallbodens positioniert, wobei die Halterung Öffnungen aufweist, die den Tieren Zugang zur Leckmasse ermöglichen. Zwar wird die Leckmasse von den Schweinen gut akzeptiert. Jedoch sind die Halterungen verhältnismäßig teuer und werden teilweise noch nicht als hinreichend anwendungsfreundlich angesehen.

Nachdem Niedersachsen und Mecklenburg-Vorpommern das Schnabelkürzen per Erlass zum 31. Dezember 2016 verboten hatten, hat sich u.a. der Zentralverband der Deutschen Geflügelwirtschaft gegenüber dem Bundesministerium für Ernährung und Landwirtschaft verpflichtet, ab dem 1. Januar 2017 auf die Einstallung schnabelgekürzter Junghennen zu verzichten. Zugleich sind Maßnahmen gegen das Federpicken bei Legehennen dringend erforderlich. Zusätzlich zur Einstreu ist ständig weiteres manipulierbares, veränderbares Material für die Beschäftigung der Tiere anzubieten. Dies vermindert das Risiko für Federpicken und Kannibalismus deutlich. Die Beschäftigungsmaterialien sollten regelmäßig erneuert bzw. gewechselt werden, um die Attraktivität für die Tiere zu erhalten. Als besonders geeignet werden Luzerneheu, Strohpellets oder Pickblöcke angesehen. Der Aufwand für das Herstellen, Verteilen, Bereitstellen und Ersetzen des Beschäftigungsmaterials für Legehennen ist hoch.

Die US 4,221,818 A beschreibt einen Futtermittelzusatz in Blockform. Der Block ist durch ein Gefache aus Wellpappe in eine Vielzahl von Zellen unterteilt. Das Gefache weist Löcher auf, durch die hindurch das Material in den verschiedenen Zellen miteinander verbunden ist. Das Abtrennen einzelner Zellen von dem Block und damit die Bereitstellung der Beschäftigungsmasse ist mühselig.

Die DE 829 246 C beschreibt eine Vorrichtung zur Verabreichung eines Tierfutterergänzungsmittels, die einen oder mehrere, zueinander parallel angeordnete und bei Belecken durch das Tier bewegte, vorzugsweise drehbare Formkörper aufweist. Die Formkörper sind so angeordnet, dass sie die dem Tier zu verabreichende flüssige oder pastöse Mischung bei ihrer Bewegung auf ihrer Oberfläche verteilt mit sich führen.

Die US 1,382,048 A beschreibt eine Fütterungsvorrichtung für einen Salz- oder Futterblock, die einen Aufnahmebehälter mit den Umrissen des Blocks aufweist. Der Block ist in den Aufnahmebehälter einsetzbar, sodass er aus einem unteren Ende des Aufnahmebehälters heraussteht und sich an einem Haltebügel abstützt. Bei fortschreitendem Verzehr kann der Block nachrutschen, bis er vollständig aufgebraucht ist.

Die US 2009/0178430 A1 beschreibt ein Tray zum Herstellen von Eiswürfeln aus einem Material, das zumindest bereichsweise die Wärmeleitfähigkeit verstärkende Additive aufweist. Hierbei handelt es sich beispielsweise um Aluminium in einer Kunststoffmatrix.

Davon ausgehend liegt der Erfindung die Aufgabe zugrunde, ein für die Tiere attraktives Beschäftigungsmaterial zu schaffen, dessen Herstellung, Lagerung, Transport, Bereitstellung und Ersatz geringeren Aufwand erfordert.

Die Aufgabe wird erfindungsgemäß durch ein Beschäftigungsmaterial nach Anspruch 1 gelöst. Vorteilhafte Ausführungsarten der Erfindung sind in Unteransprüchen angegeben.

Das erfindungsgemäße Beschäftigungsmaterial für Schweine, Geflügel oder anderen Nutztiere umfasst mehrere rinnenförmige und hohlzylindrische, in der Draufsicht rechteckige Schalen, die nebeneinander und mit ihren Schalenöffnungen auf derselben Seite angeordnet und mit einer ausgehärteten Leckmasse oder Pickmasse gefüllt sind, wobei benachbarte Schalen einteilig ausgebildet und/oder bei dem die Beschäftigungsmassen in benachbarten Schalen einteilig ausgebildet sind, wobei ferner parallele Schalen in derselben Reihe an ihren längsseitigen Rändern miteinander verbunden sind und/oder benachbarte Schalen in verschiedenen parallelen Reihen an ihren stirnseitigen Rändern miteinander verbunden sind, wobei die Schalen aus einem Mycel-Schaum oder aus einem Fasermaterial wie bei Faserformverpackungen (z.B. Zellulose-Fasern) oder aus einem Material auf der Basis von Mais oder auf der Basis von Zuckerrohr oder aus einem anderen Material für Bioverpackungen hergestellt sind und die Schalen mit den darin angeordneten Beschäftigungsmassen durch Trennen der Verbindungen dazwischen vereinzelbar sind.

Dadurch, dass die mehreren Schalen in einer Gruppe nebeneinander und mit den Schalenöffnungen auf derselben Seite angeordnet sind, sind sie besonders einfach mit einer aushärtbaren Leckmasse oder Pickmasse (Beschäftigungsmasse) befüllbar. Vorzugsweise weisen sämtliche Schalenöffnungen nach oben. Zum Befüllen kann die Beschäftigungsmasse im fließfähigen, in der Regel hochviskosen Zustand von oben in die Schalenöffnungen der Schalen eingegossen werden. Es ist möglich, die Beschäftigungsmasse zentral in die Gruppe Schalen einzugeben, so dass sie sich über sämtliche Schalen verteilt. Es ist aber auch möglich, die Beschäftigungsmasse einzeln in jede Schale abzufüllen. Nach dem Aushärten bilden die Schalen mit der darin enthaltenen Beschäftigungsmasse eine Einheit. Die Schalen bilden eine Art verlorene Schalung, indem sie gemeinsam mit der eingefüllten Beschäftigungsmasse für die Beschäftigung der Tiere verwendet werden. Die Schalen sind vorzugsweise aus einem Material hergestellt, das für einen Verzehr durch die Nutztiere geeignet ist. Die Schalen können aber auch aus einem nicht-verzehrbaren Material bestehen. Vorzugsweise werden die Schalen in der Anordnung, die sie beim Befüllen mit Leckmasse aufweisen, in einer oder mehreren Lagen übereinander gelagert und transportiert. Insgesamt wird der Aufwand für Herstellung, Lagerung und Transport verringert. Ferner kann das Beschäftigungsmaterial den Tieren in einer Form angeboten werden, die besonders gute Akzeptanz findet. So können zwei Schalen an ihren Schalenöffnungen zu einer Vollschale zusammengesetzt durch ein vertikales Rohr, dessen unteres Ende einen geeigneten Abstand vom Boden aufweist, Schweinen zur Verfügung gestellt werden. Hierdurch wird insbesondere der Wühltrieb der Schweine angesprochen. Ferner können die Schalen mit nach oben gerichteten Schalenöffnungen für Geflügel bereitgestellt werden, so dass die Tiere durch die Schalenöffnungen hindurch von oben in die Pickmasse hineinpicken können.

Die Schalen sind rinnenförmig und hohlzylindrisch mit teilelliptischem, teilkreisförmigem oder anders gekrümmtem Querschnitt oder mit U-förmigem oder mehreckigem Querschnitt. Bei dem Querschnitt handelt es sich um einen senkrecht durch die Schalenöffnung gerichteten Querschnitt.
Gemäß einer weiteren Ausführungsart sind die Schalen parallel nebeneinander angeordnet. Gemäß einer bevorzugten Ausführungsart sind rinnenförmige Schalen parallel nebeneinander angeordnet.

Gemäß einer weiteren Ausführungsart sind die Schalenöffnungen in einer gemeinsamen Ebene angeordnet. Hierdurch wird das gleichmäßige Befüllen der Schalen durch die Schalenöffnungen erleichtert.

Gemäß einer bevorzugten Ausführungsart sind die Schalen Halbschalen, sodass sie zu einer Vollschale zusammensetzbar sind. Beispielsweise sind die Schalen halbzylindrische Schalen und sind an ihren Schalenöffnungen zu einem Vollzylinder zusammensetzbar.

Gemäß einer bevorzugten Ausführungsart sind benachbarte Schalen einteilig ausgebildet. Gemäß einer bevorzugten Ausführungsart sind die Beschäftigungsmassen in benachbarten Schalen einteilig ausgebildet. Hierbei bilden die mehreren Schalen mit den darin angeordneten Beschäftigungsmassen eine für die Herstellung vorteilhafte Einheit. Insbesondere wird die Herstellung durch zentrales Befüllen mit aushärtbarer Beschäftigungsmasse vereinfacht. Ferner ist der Zusammenhalt zwischen den benachbarten Schalen bzw. der darin angeordneten Beschäftigungsmasse für die stabile Anordnung bei Lagerung und Transport des Beschäftigungsmaterials von Vorteil. Gemäß einer bevorzugten Ausführungsart sind sämtliche benachbarten Schalen der Gruppe einteilig ausgebildet. Gemäß einer bevorzugten Ausführungsart sind die Beschäftigungsmassen in sämtlichen benachbarten Schalen der Gruppe einteilig ausgebildet. Für die Verwendung des Beschäftigungsmaterials können die Schalen bzw. die darin angeordneten Beschäftigungsmassen leicht durch Trennen der Verbindungen dazwischen vereinzelt werden. Dies begünstigt ein Portionieren und ein Anbieten des Beschäftigungsmaterials in einer besonders gute Akzeptanz bei den Tieren findenden Form.

Gemäß einer bevorzugten Ausführungsart umfasst das Beschäftigungsmaterial in mehreren parallelen Reihen parallel nebeneinander angeordnete Schalen. Diese Ausführungsart betrifft rinnenförmige Schalen und andere in der Draufsicht rechteckige Schalen. Bei dieser Ausführungsart sind die längsseitigen Ränder benachbarter Schalen in den Reihen jeweils nebeneinander angeordnet. Ferner sind benachbarte Schalen aus verschiedenen Reihen mit ihren Stirnseiten parallel nebeneinander angeordnet. Gemäß einer bevorzugten Ausführungsart sind in zwei parallelen Reihen jeweils drei Schalen parallel nebeneinander angeordnet, d.h. insgesamt sechs Schalen.

Gemäß einer weiteren Ausführungsart sind die parallelen Schalen in derselben Reihe an ihren längsseitigen Rändern miteinander verbunden und/oder sind benachbarte Schalen in verschiedenen parallelen Reihen an ihren stirnseitigen Rändern miteinander verbunden. Dies erleichtert die Herstellung des Beschäftigungsmaterials.

Gemäß einer weiteren Ausführungsart steht vom außen um sämtliche Schalen umlaufenden Rand ein Überstand über die Ebene der Schalenöffnungen hinaus vor und sind die Schalen über die Ebene der Schalenöffnungen hinaus mit Beschäftigungsmasse befüllt. Durch den überstehenden Rand wird ein seitliches Ablaufen der fließfähigen Beschäftigungsmasse bei der Herstellung verhindert.

Gemäß einer weiteren Ausführungsart sind die Schalen in eine quaderförmige Umverpackung eingesetzt. Die Umverpackung kann bereits bei der Herstellung verwendet werden, indem die Schalen darin beim Befüllen mit fließfähiger Beschäftigungsmasse gehalten sind. Ferner kann die Umverpackung dazu dienen, ein seitliches Ablaufen von fließfähiger Beschäftigungsmasse beim Befüllen der Schalen zu verhindern. Vorzugsweise weisen die in die Umverpackung eingesetzten Schalen an dem um sämtliche Schalen umlaufenden Rand einen Überstand auf, der ein seitliches Ablaufen verhindert.

Gemäß einer bevorzugten Ausführungsart sind die mehreren Schalen und der Überstand einteilig ausgebildet. Hierdurch wird die Herstellung vereinfacht.

Die mehreren Schalen oder die mehreren Schalen und der Überstand sind aus einem Mycelschaum (z.B. gemäß US-Patent Method for Producing Fungus Structures US 20120135504 A1) oder aus einem Fasermaterial wie bei Faserformverpackungen (z.B. Cellulosefasern) oder aus einem Material auf der Basis von Mais oder auf der Basis von Zuckerrohr oder aus einem anderen Material für Bioverpackungen oder aus Karton oder aus Wellpappe hergestellt. Gemäß einer weiteren Ausführungsart ist der Umkarton aus Karton oder aus Wellpappe hergestellt.

Gemäß einer weiteren Ausführungsart hat jede Schale eine Länge von 290 mm bis 300 mm, vorzugsweise von 295 mm, eine Breite an der Schalenöffnung von 115 mm bis 125 mm, vorzugsweise von 120 mm, und eine Höhe von 75 mm bis 85 mm, vorzugsweise von 80 mm. Gemäß einer weiteren Ausführungsart weist das Beschäftigungsmaterial 6 Schalen auf. Gemäß einer weiteren Ausführungsart hat die Umverpackung eine Länge von 600 mm und eine Breite von 400 mm und eine Höhe von maximal 200 mm, vorzugsweise von maximal 100 mm. Mit diesen Abmessungen kann in einer Umverpackung Beschäftigungsmaterial mit einem Gesamtgewicht von 16 bis 17 kg zusammengefasst werden. Dieses Format ist vorteilhaft für das Handling der Umverpackung. Ferner ergeben sich vorteilhafte Portionsgrößen. Das Beschäftigungsmaterial ist platzsparend auf einer Europalette lagerbar.

Gemäß einer weiteren Ausführungsart weist eine Leckmasse die folgende Rezeptur auf:
- 30% Melasse (Rohr- und Rübenzucker)
- 26% Magnesiumoxid
- 24% Natriumchlorid
- 12% Dicalciumphosphat
- 6% Calciumcarbonat
- 2% Rapsöl

Gemäß einer weiteren Ausführungsart weist eine Pickmasse die folgende Rezeptur auf:
- 30% Calciumcarbonat
- 20% Magnesiumoxid
- 18% Melasse (Rohr- und Rübenzucker)
- 17% Mais
- 10% Monocalciumphosphat
- 5% Natriumchlorid

Ferner betrifft die Erfindung eine Transporteinheit umfassend mehrere übereinander angeordnete Lagen enthaltend jeweils mehrere Umverpackungen enthaltend jeweils ein Beschäftigungsmaterial gemäß einem der Ansprüche 1 bis 9 auf einer Europalette. Gemäß einer bevorzugten Ausführungsart sind acht Lagen bestehend aus jeweils vier Kartons auf einer Europalette gestapelt. Die Transporteinheit ist besonders wirtschaftlich.

Ferner betrifft die Erfindung die Verwendung eines Applikators, umfassend ein vertikal mittels mindestens eines Halters an einem Träger mit der unteren Öffnung in einem Abstand vom Boden befestigtes Rohr, bei dem Schalen mit Befestigungsmassen eines Beschäftigungsmaterials gemäß einem der Ansprüche 1 bis 9 vereinzelt und mindestens zwei mit Beschäftigungsmasse gefüllte Schalen in dem Rohr nebeneinander und mit den Schalenöffnungen einander zugewandt angeordnet werden Die beiden Schalen rutschen durch das Rohr nach unten und sind in dem Abstandsbereich zwischen Rohr und Boden für die Tiere zugänglich. Von oben ist ein Nachbefüllen möglich. Mehrere Paare Schalen können übereinander in das Rohr eingesteckt werden, so dass nach dem Verbrauch der beiden unteren Schalen die darüber angeordneten Schalen nachrutschen und eine Versorgung über einen längeren Zeitraum gewährleistet ist.

Gemäß einer bevorzugten Ausführungsart ist am unteren Ende des Rohrs ein Stopper in Form einer L-förmigen Stange gehalten, wobei ein Schenkel des Stoppers am Rohr fixiert ist und sich der andere Schenkel unterhalb der unteren Öffnung des Rohres erstreckt. Der Stopper bildet einen Anschlag für Schalen, die von oben in das Rohr eingesetzt sind, so dass diese nicht bis auf den Boden herunterrutschen. Seitlich des Stoppers haben die Tiere Zugang zum Beschäftigungsmaterial.

Schließlich ist Gegenstand der Erfindung ein Verfahren zur Verwendung eines Applikators, umfassend eine oben offene Rinne, bei dem Schalen mit Beschäftigungsmassen eines Beschäftigungsmaterials gemäß einem der Ansprüche 1 bis 9 vereinzelt und mindestens eine mit Beschäftigungsmasse gefüllte Schale mit der Schalenöffnung nach oben ausgerichtet in der Rinne angeordnet wird. Bei diesem Applikator wird die Beschäftigungsmasse für einen Zugang von oben bereitgehalten. Bei entsprechender Dimensionierung der Rinne können mehrere Schalen hintereinander in den Applikator eingesetzt werden, um einer größeren Anzahl Tiere gleichzeitig Zugang zu gewähren. Dieser Applikator eignet sich besonders für Legehennen und anderes Geflügel.

Die Erfindung wird nachfolgend anhand der anliegenden Zeichnungen von Ausführungsbeispielen näher erläutert. In den Zeichnungen zeigen:
- Fig. 1: parallele Schalen in parallelen Reihen in einer Perspektivansicht schräg von oben und von der Seite;
- Fig. 2: Schalen von Fig.1 mit einem außen umlaufenden Überstand eingesetzt in eine geöffnete Umverpackung aus Karton in einer Perspektivansicht schräg von oben;
- Fig. 3: Umverpackungen mit eingesetzten Schalen gemäß Fig. 2 beim Befüllen von Beschäftigungsmaterial in einer Perspektivansicht schräg von oben und von der Seite;
- Fig. 4: geöffnete Umverpackung mit eingesetzten Schalen gemäß Fig. 2 befüllt mit Beschäftigungsmasse in einer Perspektivansicht schräg von oben;
- Fig. 5: eine Lage geschlossener Umverpackungen gemäß Fig. 4 auf einer Europalette in einer Perspektivansicht schräg von oben und von der Seite;
- Fig. 6: geschlossene Umverpackungen in mehreren Lagen übereinandergestapelt in einer Perspektivansicht schräg von oben und von der Seite;
- Fig. 7: Applikator für Beschäftigungsmaterial zur Verabreichung an Schweine in einer Perspektivansicht schräg von oben;
- Fig. 8: derselbe Applikator befüllt mit Beschäftigungsmaterial in einer Perspektivansicht schräg von oben;
- Fig. 9: Applikator befüllt mit Beschäftigungsmaterial zur Verabreichung an Legehennen in einer Perspektivansicht schräg von oben und von der Seite.

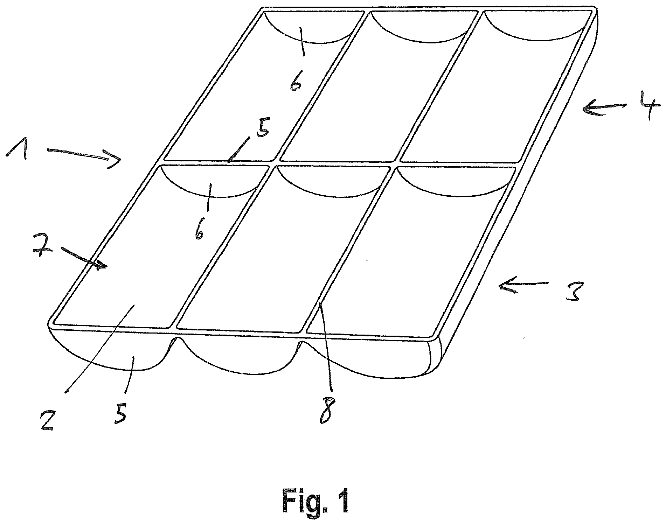

Fig. 1 zeigt eine Gruppe 1 bzw. Anordnung aus mehreren Schalen 2, wobei in zwei parallelen Reihen 3, 4 jeweils drei zueinander parallele, rinnenförmige Schalen 2 angeordnet sind. Im Beispiel haben die Schalen 2 die Querschnittsform einer halben Ellipse, d.h. sie sind Hälften elliptischer Hohlzylinder. Die Schalen können aber auch andere teilelliptische, halbkreisförmige oder andere teilkreisförmige, andere gekrümmte, U-förmige oder mehreckige Querschnittsformen aufweisen. Ferner können sie eine napfförmige Geometrie (z.B. topfförmig, kugelförmig oder in anderer Weise schüsselförmig, kegelstumpfförmig, kastenförmig oder pyramidenstumpfförmig) aufweisen.

Jede rinnenförmige Schale 2 ist an beiden Enden durch eine Stirnwand 5, 6 geschlossen, die den jeweiligen Querschnitt begrenzt. Die Stirnwände 5, 6 jeder Schale 2 sind nach außen geneigt, so dass ihr Abstand voneinander zu ihrem oberen Rand hin zunimmt.

In den Reihen 3, 4 sind benachbarte Schalen 2 an den längsseitigen Rändern miteinander verbunden. Benachbarte Schalen 2 verschiedener Reihen 3, 4 sind an den querseitigen Rändern miteinander verbunden. Die Stirnwände 5, 6 der benachbarten Schalen 2 sind aufeinander zu geneigt, so dass sie oben an den querseitigen Rändern zusammentreffen.

Jede Schale 2 hat oben eine rechteckige Schalenöffnung 7. Sämtliche Schalenöffnungen 7 liegen in einer gemeinsamen Ebene 8.

Die Gruppe 1 aus Schalen 2 ist vorzugsweise einteilig ausgebildet. Vorzugsweise sind sie aus einem Material hergestellt, das für Faserformverpackungen verwendet wird. Bekannte Beispiele von Faserformverpackungen sind Eierverpackungen und Lagerschalen (Trays) für Obst, Wein oder andere Getränke.

Die Gruppe 1 aus Schalen 2 gemäß Fig. 1 bildet einen Einsatz. Vorzugsweise ist der Einsatz 9 zusätzlich am äußeren umlaufenden Rand mit einem über die Ebene 8 der Schalenöffnungen 7 nach oben vorstehenden Überstand 10 versehen.

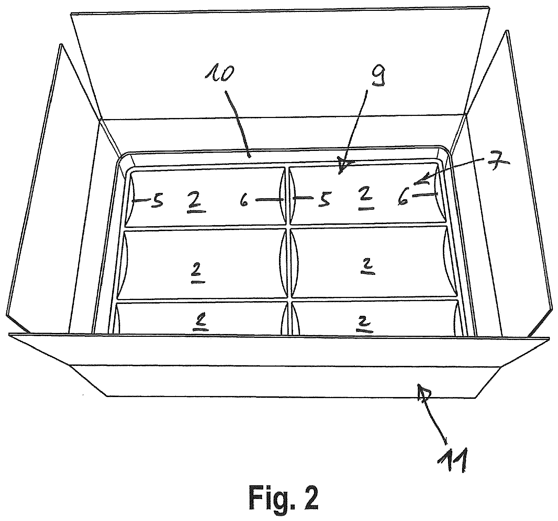

Gemäß Fig. 2 ist ein solcher Einsatz 9 mit Überstand 10 in eine geöffnete Umverpackung 11 in Form einer quaderförmigen Faltschachtel aus Wellpappe oder Karton eingesetzt.

Aufgrund der Neigung der Stirnwände 5, 6 und den gerundeten Seiten der Schalen 2 ist der Einsatz 9 leicht in die Umverpackung 11 einsetzbar.

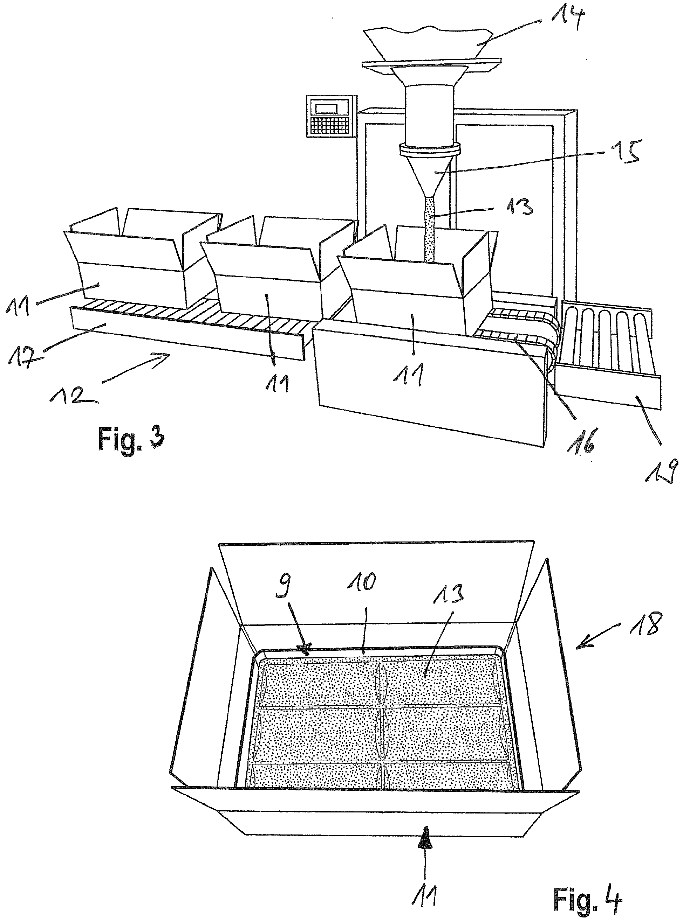

Gemäß Fig. 3 umfasst eine Anlage 12 zum Befüllen der Schalen 2 eines Einsatzes 9 mit Beschäftigungsmasse 13 einen Vorratsbehälter 14 für Beschäftigungsmasse 13 und einen darunter angeordneten Abgabekopf 15, aus dem die pastöse Beschäftigungsmasse 13 im fließfähigen Zustand unten austreten kann.

Unter dem Abgabekopf 15 ist ein Transportband 16 angeordnet, auf dem eine Umverpackung 11 mit einem eingesetzten Einsatz 9 positioniert ist. In der gezeigten Lage wird der Einsatz 9 der Umverpackung 11 mit fließfähiger Beschäftigungsmasse 13 befüllt, so dass sie sich über die querseitigen und längsseitigen Ränder hinweg über sämtliche Schalen 2 verteilt. Der Überstand 10 verhindert ein seitliches Überlaufen der Beschäftigungsmasse 13. In diesem Zustand ist der Einsatz 9 in der Umverpackung 11 in Fig. 4 gezeigt. Während einer bestimmten Aushärtezeit härtet die Beschäftigungsmasse 13 in dem Einsatz 9 aus.

Dem Transportband 16 zugeführt werden die Umverpackungen 11 mit den eingesetzten Einsätzen 9 über ein Rollenband 17 und die mit Beschäftigungsmasse 13 befüllten Gebinde 18 werden von dem Transportband 16 auf ein weiteres Rollenband 19 abgegeben.

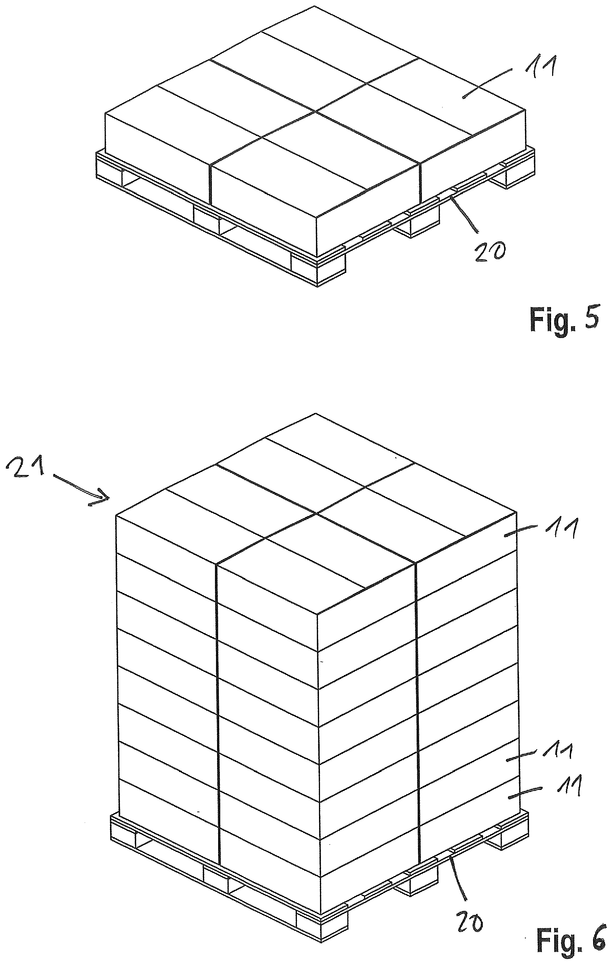

Vor oder nach dem Aushärten werden die Umverpackungen 11 geschlossen und gemäß Fig. 5 und 6 in mehreren Lagen auf einer Europalette 20 gestapelt. Diese Transporteinheit 21 wird zum Händler oder zum Anwender transportiert.

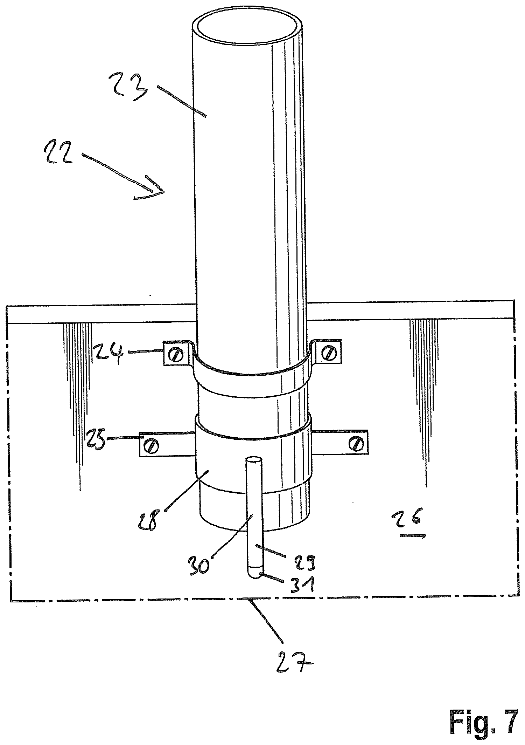

Gemäß Fig. 7 weist ein Applikator 22 für Beschäftigungsmaterial ein Rohr 23 auf, das mittels Klammern 24, 25 an einer Wand 26 oder einem anderen Träger fixiert ist, so dass sein unteres Ende einen Abstand vom Boden 27 aufweist. Das Rohr 23 besteht beispielsweise aus Kunststoff, Ton oder Metall. Beispielsweise kommt ein KG-Rohr (Kanalgrund-Rohr) aus der Entwässerungstechnik zum Einsatz. Der Innendurchmesser des Rohrs 23 entspricht dem maximalen Durchmesser zweier Schalen 2, die an ihren Schalenöffnungen 7 zusammengesetzt sind.

Am unteren Ende des Rohrs 23 ist mittels einer weiteren Klammer 28 ein Stopper 29 gehalten. Dieser besteht aus einem L-förmig gebogenen Rundstahl. Ein Schenkel 30 des Stoppers ist an der Klammer 28 fixiert und der andere Schenkel 31 erstreckt sich unterhalb der unteren Öffnung des Rohres 23.

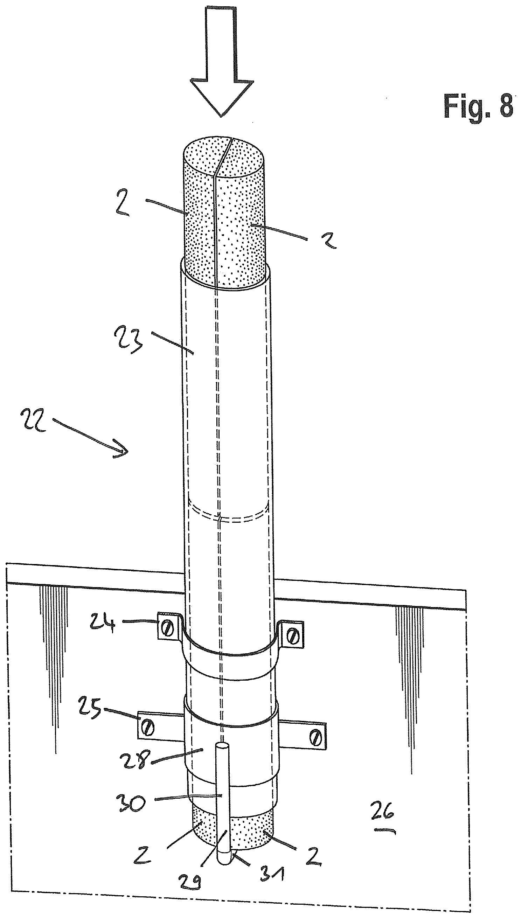

Gemäß Fig. 8 sind in das Rohr vier mit ausgehärteter Beschäftigungsmasse 13 (hier: Leckmasse) gefüllte Schalen 2 eingesetzt. Diese sind durch Abbrechen von vier Schalen eines mit Beschäftigungsmasse 13 befüllten Einsatzes 9 aus einer Umverpackung 11 von Fig. 4 entstanden. Einzelne befüllte Schalen 2 lassen sich leicht voneinander trennen, weil ihre Verbindung an den längsseitigen und querseitigen Rändern nur eine verhältnismäßig geringe Festigkeit hat. Dies gilt auch für die kleine Schicht aus ausgehärteter Beschäftigungsmasse 13, die oberhalb der längsseitigen und querseitigen Ränder angeordnet ist.

Jeweils zwei Schalen 2 sind an den Schalenöffnungen 7 zu einem Paar zusammengesetzt und zwei Paare Schalen 2 sind nacheinander in die obere Öffnung des Rohres 23 eingesetzt. Die Schalen 2 des unteren Paares treten aus der unteren Öffnung des Rohres 23 hervor, bis sie an dem Stopper 29 anliegen. Der hervorstehende Teil der Schalen 2 ist für Schweine als Beschäftigungsmaterial zugänglich.

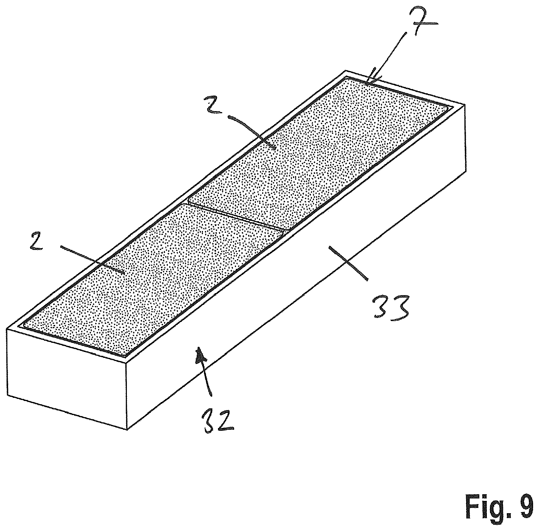

Gemäß Fig. 9 sind zwei mit Beschäftigungsmasse 13 (hier: Pickmasse) befüllte Schalen 2, die von einem Einsatz 9 aus einer Umverpackung 11 gemäß Fig. 5 und 6 abgetrennt sind, in einen Applikator 32 in Form einer nach oben geöffneten Rinne 33 mit einem den Schalen 2 entsprechenden Querschnitt eingesetzt. Von oben ist die Beschäftigungsmasse 13 durch die horizontal ausgerichteten Schalenöffnungen 7 für Legehennen zugänglich.

Die Applikatoren 22, 32 können leicht gereinigt und nachverfüllt werden.

## Patentansprüche

1. Beschäftigungsmaterial für Schweine, Geflügel oder andere Nutztiere, umfassend mehrere rinnenförmige und hohlzylindrische, in der Draufsicht rechteckige Schalen (2), die nebeneinander und mit ihren Schalenöffnungen (7) auf derselben Seite angeordnet und mit einer ausgehärteten Leckmasse oder Pickmasse (13) gefüllt sind, wobei benachbarte Schalen (2) einteilig ausgebildet und/oder bei dem die Beschäftigungsmassen (13) in benachbarten Schalen (2) einteilig ausgebildet sind, wobei ferner parallele Schalen (2) in derselben Reihe (3, 4) an ihren längsseitigen Rändern miteinander verbunden sind und/oder benachbarte Schalen (2) in verschiedenen parallelen Reihen (3, 4) an ihren stirnseitigen Rändern miteinander verbunden sind, wobei die Schalen (2) aus einem Mycelschaum oder aus einem Fasermaterial wie bei Faserformverpackungen (z.B. Cellulosefasern) oder aus einem Material auf der Basis von Mais oder auf der Basis von Zuckerrohr oder aus einem anderen Material für Bioverpackungen hergestellt sind und die Schalen mit den darin angeordneten Beschäftigungsmassen durch Trennen der Verbindungen dazwischen vereinzelbar sind.

2. Beschäftigungsmaterial nach Anspruch 1, bei dem die Schalenöffnungen (7) in einer gemeinsamen Ebene (8) angeordnet sind.

3. Beschäftigungsmaterial nach Anspruch 1 oder 2, umfassend in mehreren parallelen Reihen (3, 4) parallel nebeneinander angeordnete Schalen (2).

4. Beschäftigungsmaterial nach Anspruch 3, bei dem in zwei Reihen (3, 4) jeweils drei Schalen (2) angeordnet sind.

5. Beschäftigungsmaterial nach einem der Ansprüche 1 bis 4, bei dem vom außen um sämtliche Schalen (2) umlaufenden Rand ein Überstand (10) über die Ebene (8) der Schalenöffnungen (7) hinaus vorsteht und die Schalen (2) über die Ebene (8) der Schalenöffnungen (7) hinaus mit Beschäftigungsmasse (13) befüllt sind.

6. Beschäftigungsmaterial nach einem der Ansprüche 1 bis 5, bei dem die Schalen (2) in eine quaderförmige Umverpackung (11) eingesetzt sind.

7. Beschäftigungsmaterial nach einem der Ansprüche 1 bis 6, bei der die mehreren Schalen (2) und der Überstand (10) einteilig ausgebildet sind.

8. Beschäftigungsmaterial nach einem der Ansprüche 1 bis 7, bei dem der Überstand (10) aus einem Mycelschaum oder aus einem Fasermaterial wie bei Faserformverpackungen (z.B. Cellulosefasern) oder aus einem Material auf der Basis von Mais oder auf der Basis von Zuckerrohr oder aus einem anderen Material für Bioverpackungen hergestellt ist und/oder bei dem die Umverpackung (11) aus Karton oder aus Wellpappe hergestellt ist.

9. Beschäftigungsmaterial nach einem der Ansprüche 1 bis 8, bei dem jede Schale (2) eine Länge von 290 mm bis 300 mm, vorzugsweise von 295 mm, eine Breite an der Schalenöffnung (7) von 115 mm bis 125 mm, vorzugsweise von 120 mm, und eine Höhe von 75 mm bis 85 mm, vorzugsweise von 80 mm aufweist und/oder bei der die Umverpackung (11) eine Länge von 600 mm und eine Breite von 400 mm und eine Höhe von maximal 200 mm, vorzugsweise von maximal 100 mm aufweist.

10. Transporteinheit (21), umfassend mehrere übereinander angeordnete Lagen enthaltend jeweils mehrere Umverpackungen (11) enthaltend jeweils ein Beschäftigungsmaterial (13) nach einem der Ansprüche 1 bis 9 auf einer Europalette (20).

11. Verfahren zur Verwendung eines Applikators , umfassend ein vertikal an einer Wand (26) oder anderem Träger mittels mindestens eines Halters (24, 25) mit der unteren Öffnung in einem Abstand vom Boden (27) befestigtes Rohr (23), bei dem miteinander verbundene Schalen mit Beschäftigungsmasse eines Beschäftigungsmaterials gemäß einem der Ansprüche 1 bis 9 vereinzelt werden und mindestens zwei dieser vereinzelten und mit Beschäftigungsmasse (13) gefüllten Schalen (2) in dem Rohr (23) nebeneinander und mit den Schalenöffnungen (7) einander zugewandt angeordnet werden.

12. Verfahren zur Verwendung eines Applikators, umfassend eine oben offene Rinne (33), bei dem miteinander verbundene Schalen mit Beschäftigungsmasse eines Beschäftigungsmaterials gemäß einem der Ansprüche 1 bis 9 vereinzelt werden und mindestens eine dieser vereinzelten und mit Beschäftigungsmasse (13) gefüllten Schalen (2) mit der Schalenöffnung (7) nach oben ausgerichtet in der Rinne (33) angeordnet wird.

## Claims

1. An enrichment material for pigs, poultry or other farm animals, comprising multiple trough-shaped and hollow-cylindrical shells (2) that are rectangular when viewed from the top and are arranged next to each other and with their shell openings (7) on the same side and are filled with a hardened licking mass or pecking mass (13), wherein adjacent shells (2) are designed as a single piece and/or in which the enrichment masses (13) in adjacent shells (2) are designed as a single piece, wherein, furthermore, parallel shells (2) in the same row (3, 4) are connected to each other on their longitudinal edges and/or adjacent shells (2) in different parallel rows (3, 4) are connected to each other on their end-face edges, wherein the shells (2) are produced from a mycelium foam or from a fiber material such as that for molded fiber packaging (e.g. cellulose fibers) or from a material on the basis of corn or on the basis of sugarcane or from another material for biodegradable packaging, and the shells with the enrichment masses arranged therein can be separated by severing the connections between them.

2. The enrichment material according to claim 1, in which the shell openings (7) are arranged in a common plane (8).

3. The enrichment material according to claim 1 or 2, comprising shells (2) arranged in parallel next to each other in multiple parallel rows (3, 4).

4. The enrichment material according to claim 3, in which three shells (2) are arranged in each of two rows (3, 4).

5. The enrichment material according to one of claims 1 to 4, in which a protrusion (10) protrudes above the plane (8) of the shell openings (7) from the edge running along the outside around all of the shells (2) and the shells (2) are filled above the plane (8) of the shell openings (7) with enrichment mass (13).

6. The enrichment material according to one of claims 1 to 5, in which the shells (2) are inserted into a cuboidal outer packaging (11).

7. The enrichment material according to one of claims 1 to 6, in which the multiple shells (2) and the protrusion (10) are designed as a single piece.

8. The enrichment material according to one of claims 1 to 7, in which the protrusion (10) is produced from a mycelium foam or from a fiber material such as that for molded fiber packaging (e.g. cellulose fibers) or from a material on the basis of corn or on the basis of sugarcane or from another material for biodegradable packaging and/or in which the outer packaging (11) is produced from cardboard or from corrugated cardboard.

9. The enrichment material according to one of claims 1 to 8, in which each shell (2) has a length of 290 mm to 300 mm, preferably 295 mm, a width at the shell opening (7) of 115 mm to 125 mm, preferably 120 mm, and a height of 75 mm to 85 mm, preferably 80 mm and/or in which the outer packaging (11) has a length of 600 mm and a width of 400 mm and a height of maximally 200 mm, preferably maximally 100 mm.

10. A transport unit (21), comprising multiple layers arranged one on top of the other, each containing multiple outer packagings (11), each containing an enrichment material (13) according to one of claims 1 to 9, on a europallet (20).

11. A method for using an applicator, comprising a tube (23) attached vertically to a wall (26) or to another carrier by means of at least one mount (24, 25) with the lower opening at a distance from the floor (27), in which shells that are connected to each other and contain an enrichment mass of an enrichment material according to one of claims 1 to 9 are separated and at least two of these shells (2) that are separated and filled with enrichment mass (13) are arranged in the tube (23) next to each other and with the shell openings (7) facing each other.

12. The method for using an applicator, comprising a trough (33) that is open at the top, in which shells that are connected to each other and contain enrichment mass of an enrichment material according to one of claims 1 to 9 are separated and at least one of these shells (2) that are separated and filled with enrichment mass (13) is arranged in the trough (33) with the shell opening (7) oriented upwards.

## Revendications

1. Matériel d'occupation pour cochons, volailles ou autres animaux de ferme, comprenant plusieurs cuvettes (2) en forme de rigole et cylindriques creuses, rectangulaires en vue de dessus qui sont disposées les unes à côté des autres et avec leurs ouvertures de cuvette (7) sur le même côté, et remplies d'une masse à lécher ou masse à picorer durcie (13), dans lequel des cuvettes voisines (2) sont réalisées d'une pièce et/ou dans lequel les masses d'occupation (13) dans des cuvettes voisines (2) sont réalisées d'une pièce, dans lequel des cuvettes parallèles (2) dans la même rangée (3, 4) sont en outre connectées les unes aux autres sur leurs bords longitudinaux et/ou des cuvettes voisines (2) dans différentes rangées parallèles (3, 4) sont connectées les unes aux autres sur leurs bords frontaux, dans lequel les cuvettes (2) sont fabriquées en une mousse de mycélium ou en un matériau fibreux comme pour des emballages moulés fibreux (par exemple fibres de cellulose) ou en un matériau à base de maïs ou à base de canne à sucre ou en un autre matériau pour emballages biologiques et les cuvettes avec les masses d'occupation disposées en leur sein peuvent être individualisées par séparation des connexions entre elles.

2. Matériel d'occupation selon la revendication 1, dans lequel les ouvertures de cuvette (7) sont disposées dans un plan commun (8).

3. Matériel d'occupation selon la revendication 1 ou 2, comprenant des cuvettes (2) disposées parallèlement les unes à côté des autres en plusieurs rangées parallèles (3, 4).

4. Matériel d'occupation selon la revendication 3, dans lequel trois cuvettes (2) sont à chaque fois disposées en deux rangées (3, 4).

5. Matériel d'occupation selon une des revendications 1 à 4, dans lequel une saillie (10) fait saillie du bord périphérique de l'extérieur autour de toutes les cuvettes (2) au-delà du plan (8) des ouvertures de cuvette (7) et les cuvettes (2) sont remplies de la masse d'occupation (13) au-delà du plan (8) des ouvertures de cuvette (7).

6. Matériel d'occupation selon une des revendications 1 à 5, dans lequel les cuvettes (2) sont insérées dans un suremballage parallélépipédique (11).

7. Matériel d'occupation selon une des revendications 1 à 6, dans lequel les diverses cuvettes (2) et la saillie (10) sont réalisées d'une pièce.

8. Matériel d'occupation selon une des revendications 1 à 7, dans lequel la saillie (10) est fabriquée en une mousse de mycélium ou en un matériau fibreux comme pour des emballages moulés fibreux (par exemple fibres de cellulose) ou en un matériau à base de maïs ou à base de canne à sucre ou en un autre matériau pour emballages biologiques et/ou dans lequel le suremballage (11) est fabriqué en carton ou en carton ondulé.

9. Matériel d'occupation selon une des revendications 1 à 8, dans lequel chaque cuvette (2) présente une longueur de 290 mm à 300 mm, de préférence de 295 mm, une largeur au niveau de l'ouverture de cuvette (7) de 115 mm à 125 mm, de préférence de 120 mm, et une hauteur de 75 mm à 85 mm, de préférence de 80 mm et/ou dans lequel le suremballage (11) présente une longueur de 600 mm et une largeur de 400 mm et une hauteur de 200 mm maximum, de préférence de 100 mm maximum.

10. Unité de transport (21) comprenant plusieurs couches disposées les unes au-dessus des autres contenant chacune plusieurs suremballages (11) contenant chacun un matériel d'occupation (13) selon une des revendications 1 à 9 sur une europalette (20).

11. Procédé d'utilisation d'un applicateur comprenant un tuyau (23) fixé verticalement à une paroi (26) ou autre support au moyen d'au moins un soutien (24, 25) avec l'ouverture inférieure à un écart du fond (27), dans lequel des cuvettes connectées les unes aux autres avec une masse d'occupation d'un matériel d'occupation selon une des revendications 1 à 9 sont individualisées et au moins deux de ces cuvettes (2) individualisées et remplies de la masse d'occupation (13) sont disposées l'une à côté de l'autre dans le tuyau (23) et avec les ouvertures de cuvette (7) tournées l'une vers l'autre.

12. Procédé d'utilisation d'un applicateur comprenant une rigole ouverte en haut (33), dans lequel des cuvettes connectées les unes aux autres avec une masse d'occupation d'un matériel d'occupation selon une des revendications 1 à 9 sont individualisées et au moins une de ces cuvettes (2) individualisées et remplies de la masse d'occupation (13) est disposée dans la rigole (33) avec l'ouverture de cuvette (7) orientée vers le haut.
